# FASCICULE DE BREVET EUROPEEN

(11) **EP 2 209 716 B1**
(45) Date de publication et mention de la délivrance du brevet: **24.04.2019**
(21) Numéro de dépôt: 08854817.7
(22) Date de dépôt: 12.11.2008
(51) Int. Cl.: B64D 37/34, F02C 7/18

(54) **PROCEDE DE GESTION DES REJECTIONS THERMIQUES GENEREES PAR UN AERONEF ET DISPOSITIF DE REFROIDISSEMENT POUR AERONEF PERMETTANT LA MISE EN OEUVRE DUDIT PROCEDE**
VERFAHREN ZUR STEUERUNG VON DURCH EIN FLUGZEUG ERZEUGTEN WÄRMEABGASEN UND KÜHLVORRICHTUNG FÜR EIN FLUGZEUG MIT ANWENDUNG DIESES VERFAHRENS
METHOD FOR CONTROLLING THERMAL EFFLUENTS GENERATED BY AN AIRCRAFT AND COOLING DEVICE FOR AN AIRCRAFT IMPLEMENTING SAID METHOD

(30) Priorité: 14.11.2007 FR 0759043
(43) Date de publication de la demande: 28.07.2010
(73) Titulaire: Airbus Opérations SAS, 31060 Toulouse (FR); Airbus Deutschland GmbH, 21129 Hamburg (DE)
(72) Inventeur: BULIN, Guillaume, F-31700 Blagnac (FR); DITTMAR, Jan, D-21614 Buxtehude (DE)
(74) Mandataire: Fantin, Laurent
(86) Numéro de dépôt international: PCT/FR2008/052028
(87) Numéro de publication internationale: WO 2009/068807

(56) Documents cités:
- EP-A- 1 557 357
- WO-A-02/16743
- US-A- 4 104 873
- US-A- 4 741 152
- US-A- 4 776 536
- US-B1- 6 182 435

## Description

La présente invention se rapporte à un procédé de gestion des réjections thermiques générées par un aéronef et à un dispositif de refroidissement d'un aéronef permettant la mise en oeuvre dudit procédé.

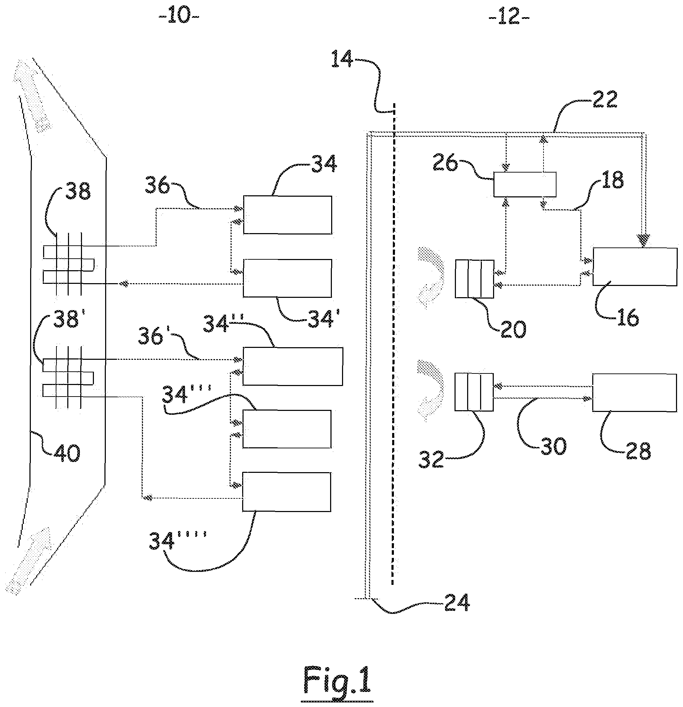

Un aéronef comprend une cellule et au moins un ensemble propulsif. Sur la figure 1, on a représenté de manière schématique en 10 une cellule et en 12 un ensemble propulsif.

Par cellule, on entend au sens large tous les éléments de l'aéronef, notamment le fuselage, les ailes, les empennages, à l'exception des ensembles propulsifs.

Selon un mode de réalisation largement répandu, un ensemble propulsif est suspendu sous une aile par l'intermédiaire d'un mât. Plus généralement, l'ensemble propulsif est relié à la cellule par l'intermédiaire d'une interface 14 matérialisée par un trait en pointillé sur la figure 1.

Un ensemble propulsif 12 comprend une turbomachine 16 équipée d'un premier circuit de refroidissement moteur 18, dans lequel circule un fluide caloporteur, notamment de l'huile, traversant un premier échangeur moteur 20 air/huile.

La turbomachine est alimentée en carburant par l'intermédiaire d'un circuit de carburant 22 s'étendant depuis un réservoir 24 disposé au niveau de la cellule.

Dans certains cas, on peut utiliser plusieurs sources de refroidissement pour refroidir l'huile de la turbomachine, par exemple en utilisant un deuxième échangeur 26 huile/carburant au niveau du premier circuit de refroidissement moteur 18 et utilisé le carburant comme fluide caloporteur afin de refroidir l'huile de la turbomachine.

En complément, l'ensemble propulsif 12 peut comprendre une autre source 28 de réjections thermiques, par exemple un ou plusieurs générateurs électriques installés à proximité de la turbomachine.

Afin d'optimiser le fonctionnement de ces éléments 28, il est nécessaire de réguler leurs températures par le biais d'un second circuit de refroidissement moteur 30, dans lequel circule un fluide caloporteur traversant un troisième échangeur moteur 32, notamment un échangeur huile/air.

Les caractéristiques de chaque circuit de refroidissement moteur, à savoir les caractéristiques du fluide à refroidir, par exemple son débit, les caractéristiques de l'échangeur, par exemple ses dimensions, les caractéristiques du fluide utilisé pour refroidir, par exemple son débit, sont ajustées en fonction des besoins de régulation de la température au niveau de la source, notamment afin de maintenir la température de la source en dessous d'un certain seuil.

Dans le cas du premier circuit de refroidissement moteur, ces besoins varient selon le fonctionnement de l'aéronef et sont plus importants lorsque l'aéronef est au sol.

Ainsi, les caractéristiques du circuit de refroidissement moteur relatif à la turbomachine sont déterminées en fonction des contraintes les plus importantes lorsque l'aéronef est au sol.

La cellule 10 comprend également au moins une source de réjections thermiques 34, et généralement plusieurs, par exemple des accessoires électriques 34, des systèmes d'électroniques de puissances 34', un système de conditionnement de l'air 34", l'avionique 34'", des équipements clients 34"". Tous ces éléments doivent être régulés en température pour assurer leur fonctionnement et garantir le plus haut taux de disponibilité. A cet effet, au moins un circuit de refroidissement cellule 36 est prévu. Selon l'exemple illustré, la cellule comprend deux circuits de refroidissement cellule 36, 36' comportant chacun un échangeur 38, 38' permettant de refroidir le fluide caloporteur circulant dans chacun des circuits, ces échangeurs utilisent l'air pour refroidir le fluide caloporteur circulant dans le circuit de refroidissement.

Les caractéristiques de chaque circuit de refroidissement cellule, à savoir les caractéristiques du fluide à refroidir, par exemple son débit, les caractéristiques de l'échangeur, par exemple ses dimensions, les caractéristiques du fluide utilisé pour refroidir, par exemple son débit, sont ajustées en fonction des besoins de régulation de la température au niveau de la source, notamment afin de maintenir la température de la source en dessous d'un certain seuil.

Pour les circuits de refroidissement cellule, ces besoins varient selon le fonctionnement de l'aéronef et sont plus importants lorsque l'aéronef est en vol. Ainsi, les caractéristiques du ou des circuits de refroidissement cellule sont déterminées en fonction des contraintes les plus importantes, lorsque l'aéronef est en vol.

On note que les besoins en refroidissement pour les ensembles propulsifs et la cellule varient en fonction du vol et ne sont pas nécessairement les plus contraignants aux mêmes moments.

Ainsi, les canaux d'air 40 utilisés pour véhiculer l'air vers les échangeurs 38, 38' de la cellule sont dimensionnés pour les phases de vol les plus contraignantes, à savoir, les phase de montée, de croisière et de descente qui ne sont pas les phases les plus contraignantes pour les ensembles propulsifs.

Les échangeurs 20, 32, 38, 38' sont installés dans des canaux 40 de refroidissement ou en surface de certaines parties de l'aéronef, par exemple au niveau des nacelles des ensembles propulsifs. Or, comme ils interfèrent avec les écoulements aérodynamiques, ces échangeurs sont pénalisant en matière de traînée aérodynamique de l'aéronef, ce qui se répercute sur la consommation énergétique des ensembles propulsifs.

En matière de conception d'aéronef, les constituants de la cellule et les constituants des ensembles propulsifs sont ségrégués pour des raisons de sécurité. En effet, on doit s'assurer qu'une panne apparaissant au niveau de la cellule et venant perturber le fonctionnement des ensembles propulsifs est extrêmement improbable.

Selon une autre contrainte, un mât formant l'interface entre la cellule et un ensemble propulsif est un sous ensemble très complexe dont les dimensions sont les plus réduites possibles afin de réduire son influence sur les caractéristiques aérodynamiques de l'aéronef. Par conséquent, l'adjonction d'autres éléments en plus des éléments existants dans cette zone est quasiment impossible sans modifier les dimensions et augmenter l'influence du mât sur les caractéristiques aérodynamiques de l'aéronef. De plus, cette adjonction aurait pour conséquence de complexifier le processus de montage et démontage de l'ensemble propulsif, ce qui se révèlerait préjudiciable pour la maintenance de l'aéronef.

Le document US 4,104,873 qui décrit un procédé de gestion des réjections thermiques d'un aéronef consistant à dissiper au moins partiellement au niveau d'un ensemble propulsif des réjections thermiques générées au niveau de la cellule en utilisant le carburant comme fluide caloporteur est considéré comme le document de l'art antérieur le plus proche.

Aussi, la présente invention vise à pallier aux inconvénients de l'art antérieur en proposant un procédé de gestion des réjections thermiques d'un aéronef visant à améliorer les performances de l'aéronef sans modifier les règles de ségrégation et sans complexifier l'architecture générale de l'aéronef.

A cet effet, l'invention a pour objet un procédé de gestion des réjections thermiques d'un aéronef selon la revendication 1 ainsi qu'un dispositif de refroidissement selon la revendication 3.

L'invention permet de mutualiser les moyens de refroidissement prévus au niveau de la cellule et d'au moins un ensemble propulsif, en respectant les règles de ségrégation et en ne complexifiant pas l'interface entre la cellule et les ensembles propulsifs. Cette mutualisation permet de réduire les caractéristiques des circuits de refroidissement au niveau de la cellule et plus particulièrement des échangeurs au niveau de ladite cellule ce qui permet d'améliorer les caractéristiques aérodynamiques de l'aéronef et de réduire sa consommation énergétique.

D'autres caractéristiques et avantages ressortiront de la description qui va suivre de l'invention, description donnée à titre d'exemple uniquement, en regard des dessins annexés sur lesquels :
- la figure 1 est un schéma illustrant un dispositif de refroidissement d'un aéronef selon l'art antérieur,
- la figure 2 est un schéma illustrant un dispositif de refroidissement d'un aéronef selon l'invention,
- la figure 3 est un schéma illustrant un dispositif de refroidissement d'un aéronef selon l'invention durant les phases de fonctionnement au sol,
- la figure 4 est un schéma illustrant un dispositif de refroidissement d'un aéronef selon l'invention durant les phases de fonctionnement en vol,
- la figure 5 est un schéma illustrant un dispositif de refroidissement d'un aéronef selon l'invention en cas de panne, et
- la figure 6 est un schéma illustrant un dispositif de refroidissement d'un aéronef selon une autre variante de l'invention.

Comme indiqué précédemment, un aéronef comprend une cellule et un ou plusieurs ensembles propulsifs.

Par cellule, on entend au sens large tous les éléments de l'aéronef, notamment le fuselage, les ailes, les empennages, à l'exception des ensembles propulsifs.

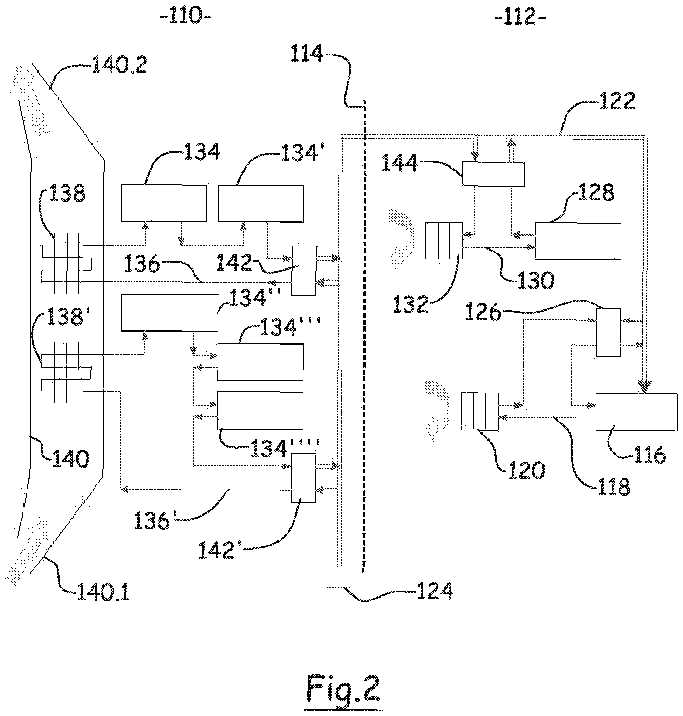

Sur les figures 2 à 6, on a représenté de manière schématique en 110 une partie de l'aéronef correspondant à la cellule et en 112 un ensemble propulsif. Les autres ensembles propulsifs ne sont pas représentés et sont généralement identiques.

Selon un mode de réalisation largement répandu, un ensemble propulsif est généralement suspendu sous une aile par l'intermédiaire d'un mât. Cependant, l'invention n'est pas limitée à ce mode de réalisation et couvre toutes les variantes concernant la liaison entre l'ensemble propulsif et la cellule. Pour la suite de la description, l'interface entre la cellule 110 et l'ensemble propulsif 112 est référencée 114 et représentée en trait pointillé.

Les éléments communs avec l'art antérieur sont référencés de la même manière que sur la figure 1 en ayant ajouté 100.

Un ensemble propulsif 112 comprend une turbomachine 116 équipée d'un premier circuit de refroidissement moteur 118, dans lequel circule un fluide caloporteur, notamment de l'huile, traversant un premier échangeur moteur 120 air/huile.

La turbomachine 116 et l'échangeur 120 sont représentés sous forme d'un rectangle et ne sont pas plus détaillés car ils sont connus de l'homme du métier. De même le circuit de refroidissement n'est également pas plus détaillé car il est également connu de l'homme du métier.

La turbomachine est alimentée en carburant par l'intermédiaire d'un circuit de carburant 122 s'étendant depuis un réservoir 124 disposé au niveau de la cellule. Comme pour les autres éléments, le circuit de carburant et le réservoir ne sont pas plus détaillés car ils sont connus de l'homme du métier.

Dans certains cas, on peut utiliser au moins une autre source de refroidissement pour refroidir l'huile de la turbomachine 116. Comme illustré, un deuxième échangeur 126 huile/carburant est prévu au niveau du premier circuit de refroidissement moteur 118. Dans ce cas, le carburant est utilisé comme fluide caloporteur afin de refroidir l'huile de la turbomachine 116. Selon ce mode de fonctionnement, la température du carburant doit rester en dessous d'un certain seuil, conforme aux règles de certifications et aux préconisations des constructeurs afin d'obtenir un fonctionnement optimal de la turbomachine.

En complément, l'ensemble propulsif 112 peut comprendre au moins une autre source 128 de réjections thermiques, par exemple un ou plusieurs générateurs électriques installés à proximité de la turbomachine 116.

Afin d'optimiser le fonctionnement de cette source de réjections thermiques 128, il est nécessaire de réguler sa température par le biais d'un second circuit de refroidissement moteur 130, dans lequel circule un fluide caloporteur traversant un troisième échangeur moteur 132, notamment un échangeur huile/air.

Les échangeurs 120 et 132 prévus au niveau de l'ensemble propulsif sont généralement de type surfacique et sont disposés au niveau de la surface aérodynamique de l'ensemble propulsif, par exemple au niveau de la surface extérieure de la nacelle de l'ensemble propulsif. Cependant, l'invention n'est pas limitée à ce mode de réalisation. Ainsi, selon d'autres variantes, les échangeurs pourraient être disposés dans un ou des canaux s'étendant depuis une entrée pour capter l'air jusqu'à une sortie pour refouler l'air. Dans tous les cas, les échangeurs interfèrent avec les écoulements d'air et ont une influence sur les caractéristiques aérodynamiques de l'aéronef.

Les besoins en refroidissement de la turbomachine ou des autres sources varient en fonction des phases de vol. Dans le cas de la turbomachine, ce besoin est le plus important lorsque l'aéronef est au sol. Par conséquent, les caractéristiques du premier circuit moteur 118, et plus particulièrement de l'échangeur 120 sont déterminées lorsque l'aéronef est au sol ce qui correspond à la phase de vol durant laquelle les besoins sont les plus importants. Par conséquent, les capacités de refroidissement du premier circuit moteur 118, et plus particulièrement celles de l'échangeur 120 ne sont pas pleinement exploitées durant les autres phases du vol, notamment lors des phases de montée, de croisière et de descente. Il en est de même pour le second circuit de refroidissement moteur 130 et l'échangeur 132.

La cellule 110 comprend au moins une source de réjections thermiques 134, et généralement plusieurs par exemple les accessoires électriques 134, les systèmes d'électroniques de puissances 134', le système de conditionnement de l'air 134", l'avionique 134'", les équipements clients 134"". Ces sources de réjections thermiques sont données à titre d'exemple et ne sont pas limitatives. Tous ces éléments constituant des sources de réjections thermiques doivent être régulés en température pour assurer leur fonctionnement et garantir le plus haut taux de disponibilité. A cet effet, au moins un circuit de refroidissement cellule 136 est prévu. Selon l'exemple illustré, la cellule 110 comprend deux circuits de refroidissement cellule 136, 136' comportant chacun au moins un échangeur 138, 138' permettant de refroidir le fluide caloporteur circulant dans le circuit correspondant.

Selon un mode de réalisation, le fluide caloporteur circulant dans les circuits de refroidissement cellule 136, 136' est de l'huile et les échangeurs 138, 138' sont des échangeurs à plaques de type huile/air, disposés dans au moins un canal 140 s'étendant depuis une entrée 140.1 pour capter l'air jusqu'à une sortie 140.2 pour refouler l'air. Toutefois, l'invention n'est pas limitée à ce mode de réalisation. Ainsi, les échangeurs pourraient être de type surfacique et disposés au niveau de la surface aérodynamique de la cellule. Quelle que soit la configuration, les échangeurs interfèrent avec les écoulements d'air et ont une influence sur les caractéristiques aérodynamiques de l'aéronef.

Les besoins en refroidissement des sources 134 de réjections thermiques de la cellule varient en fonction des phases de vol. Généralement, le besoin en refroidissement desdites sources 134 est le plus important lorsque l'aéronef est en vol, notamment lors des phases de montée, de croisière et de descente.

Contrairement à l'art antérieur, les caractéristiques du ou des circuit(s) de refroidissement cellule 136, 136', et plus particulièrement du ou des échangeur(s) 138, 138' ne sont pas déterminées en fonction des besoins les plus importants lorsque l'aéronef est en vol.

Selon l'invention, le procédé de gestion des réjections thermiques d'un aéronef consiste à dissiper au moins partiellement au niveau d'au moins un ensemble propulsif 112 les réjections thermiques générées au niveau de la cellule 110 en utilisant comme fluide caloporteur le carburant utilisé pour alimenter la turbomachine 116. A cet effet, le dispositif de refroidissement de l'aéronef comprend au moins un échangeur 142 au niveau d'au moins un circuit de refroidissement cellule 136 permettant de transférer de la chaleur depuis le fluide caloporteur du circuit de refroidissement cellule 136 vers le carburant.

Pour la suite de la description, le ou les échangeurs 142 sont appelés échangeurs d'interfaçage 142. Selon un mode de réalisation préféré, chaque circuit de refroidissement cellule 136, 136' comprend un échangeur d'interfaçage 142, 142'.

Même si les dessins ne représentent qu'un ensemble propulsif, l'invention peut s'appliquer à tous les ensembles propulsifs d'un aéronef. Ainsi, la quantité de chaleur provenant de la cellule peut être dissipée dans plusieurs ensembles propulsifs ce qui permet de réduire la quantité de chaleur dissipée par chacun des ensembles propulsifs.

Par ailleurs, le débit en carburant lors des phases de montée, de croisière et de descente étant très nettement supérieur au débit lorsque l'aéronef est au sol, il est possible de dissiper une plus grande quantité de chaleur durant ces phases sans provoquer une élévation excessive de température du carburant.

Selon l'invention, il est possible de réduire les dimensions des échangeurs huile/air qui ont une influence sur les caractéristiques aérodynamiques, les dimensions du ou des canaux 140, ainsi que le débit de l'air circulant dans lesdits canaux, ce qui permet de réduire l'influence du dispositif de refroidissement sur les caractéristiques aérodynamiques de l'aéronef et donc la consommation énergétique de l'aéronef. Par ailleurs, même si l'ajout d'un échangeur d'interfaçage 142 conduit à augmenter la masse embarquée, le gain en terme de consommation énergétique découlant de l'amélioration des caractéristiques aérodynamiques de l'aéronef est largement supérieur à la perte découlant de cet ajout de masse embarquée.

Selon un autre avantage de l'invention, aucun nouveau circuit de fluide n'est prévu entre la cellule et un ensemble propulsif ce qui permet de respecter le principe de ségrégation et de ne pas complexifier l'interface entre la cellule et l'ensemble propulsif.

Selon l'invention afin que la température du carburant ne dépasse pas un certain seuil au niveau de la turbomachine 114, le circuit de refroidissement moteur 116 comprend un échangeur 120 huile/carburant permettant de refroidir le carburant en transférant la chaleur depuis le carburant en direction du fluide caloporteur du circuit de refroidissement moteur 116. Ainsi, contrairement à un usage selon l'art antérieur, l'échangeur 120 n'assure pas qu'un transfert de chaleur depuis le fluide caloporteur du circuit vers le carburant mais également depuis le carburant vers le fluide caloporteur du circuit de refroidissement lors de certaines phases du vol. La quantité de chaleur captée par le fluide caloporteur du circuit de refroidissement moteur 116 est ensuite dissipée dans l'échangeur 120 qui selon l'art antérieur n'est pas pleinement exploitée durant les phases du vol, notamment lors des phases de montée, de croisière et de descente.

Selon une variante, les autres circuits de refroidissement moteur 130 peuvent comprendre un échangeur 144 de type huile carburant pour assurer le transfert d'une quantité de chaleur depuis le carburant vers le fluide caloporteur du circuit de refroidissement moteur 130, ce dernier n'étant pas pleinement exploité selon l'art antérieur durant les phases du vol, notamment lors des phases de montée, de croisière et de descente. L'ajout d'un échangeur qui n'a pas d'influence sur les caractéristiques aérodynamiques de l'aéronef permet de réduire globalement la consommation de l'aéronef malgré l'augmentation de la masse embarquée.

Ainsi, selon l'invention il est possible de mutualiser les échangeurs utilisés pour le refroidissement de la cellule et du ou des ensembles propulsifs et de créer une synergie entre eux ce qui permet d'optimiser leurs dimensions et plus particulièrement celles des échangeurs disposés au niveau de la cellule, une partie de la quantité de la chaleur non dissipée par lesdits échangeurs disposés au niveau de la cellule étant dissipée dans la ou les turbomachines et/ou dans le ou les échangeurs disposés au niveau du ou des ensembles propulsifs. Cette solution permet également d'optimiser le rendement des échangeurs prévus au niveau des ensembles propulsifs, ces derniers étant utilisés plus que selon l'art antérieur lors des phases du vol (montée, croisière et descente) pour capter la chaleur du carburant et la dissiper.

Cette configuration qui permet d'obtenir un gain en matière de consommation énergétique respecte les règles de ségrégation entre la cellule et les ensembles propulsifs et ne complexifie pas l'interface entre la cellule et les ensembles propulsifs, aucun nouveau circuit n'étant prévu entre la cellule et les ensembles propulsifs.

Une telle mutualisation est plus particulièrement intéressante dans le cadre d'une architecture d'avion dite « plus électrique », qui prévoit un conditionnement d'air réalisé à l'aide de compresseurs électriques dont il faut refroidir les machines électriques et l'électronique de puissance associée et de pompes à chaleur dont il faut évacuer la puissance thermique captée.

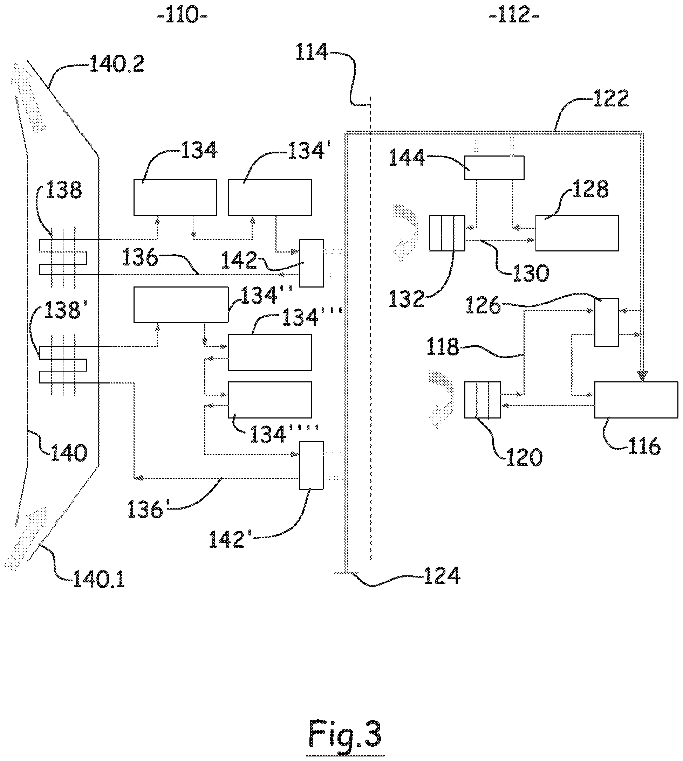

Le principe de fonctionnement est maintenant décrit au regard des figures 3 à 5. Sur la figure 3, le dispositif de refroidissement est illustré lorsque l'avion est au sol.

L'ensemble des capacités de refroidissement de chacun des ensembles propulsifs sont utilisées, cette phase de vol au sol correspondant au point de dimensionnement des circuits de refroidissement des ensembles propulsifs. Durant cette phase de vol, l'intégralité de la quantité de chaleur produite par les équipements de la cellule est dissipée au niveau de la cellule dans les échangeurs 138 et 138' placés dans le canal 140 de refroidissement de la cellule. Les échangeurs 142, 142' d'interfaçage ne sont activés.

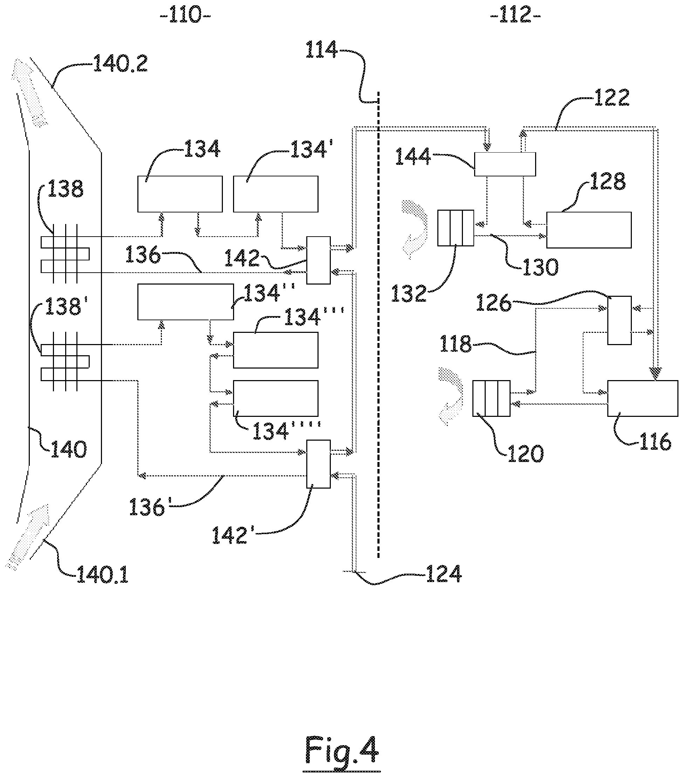

Sur la figure 4, le dispositif de refroidissement est illustré lorsque l'avion est en vol.

L'échangeur 120 et l'éventuel échangeur 132 n'étant pas dimensionnés pour ces phases de vol, il existe au niveau du ou des ensembles propulsifs des capacités en refroidissement non exploitées. Durant ces phases de vol, les échangeurs 142, 142' sont activés. Ainsi, une quantité de chaleur du ou des circuits de refroidissement cellule 136, 136' est captée au niveau desdits échangeurs 142, 142' par le carburant.

Ce dernier véhicule cette quantité de chaleur jusqu'au niveau du ou des ensembles propulsifs où elle est dissipée au niveau des turbomachines 116 et/ou captée au niveau de l'échangeur 126 et de l'éventuel échangeur 144 par un fluide caloporteur pour être dissipée au niveau de l'échangeur 120 et de l'éventuel échangeur 132 qui sont alors utilisés de façon optimale, ce qui permet de réduire les besoins en dissipation de chaleur au niveau de la cellule et contribue à réduire le dimensionnement des échangeurs 138 et 138', sans modifier de manière majeure l'architecture de l'aéronef, notamment au niveau de l'interface cellule/ensemble propulsif, tout en améliorant les caractéristiques aérodynamiques de l'aéronef et réduisant sa consommation énergétique.

Les échangeurs 120 et 132 permettent de limiter la température du carburant alimentant les turbomachines 116.

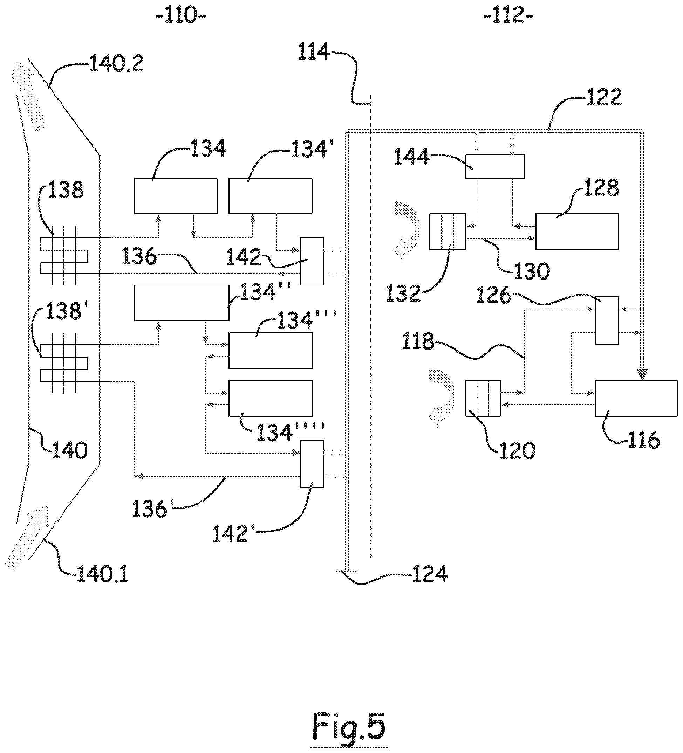

Sur la figure 5, on a représenté le dispositif en cas de panne durant une phase de vol, au sol ou en vol.

Le dispositif de refroidissement comprend des moyens de mesure et de contrôle pour permettre de vérifier son bon fonctionnement, notamment la capacité du circuit de refroidissement moteur à refroidir le carburant avant son admission dans une turbomachine.

Ainsi, dès qu'une défaillance affectant la capacité de refroidissement d'un ensemble propulsif est détectée, les moyens de mesure et de contrôle interrompent immédiatement le fonctionnement des échangeurs d'interfaçage 142, 142' et isolent le circuit de carburant 122 des circuits de refroidissement cellule 136, 136'. Ainsi, le transfert de chaleur en direction du carburant est stoppé. Dans ce cas, les réjections thermiques au niveau de la cellule doivent être limitées du fait que la capacité de refroidissement de la cellule est inférieure aux maximums des besoins, en faisant fonctionner les systèmes de la cellule dans un mode dégradé par exemple en limitant la puissance du conditionnement de l'air, en limitant la consommation électrique des équipements clients, ...

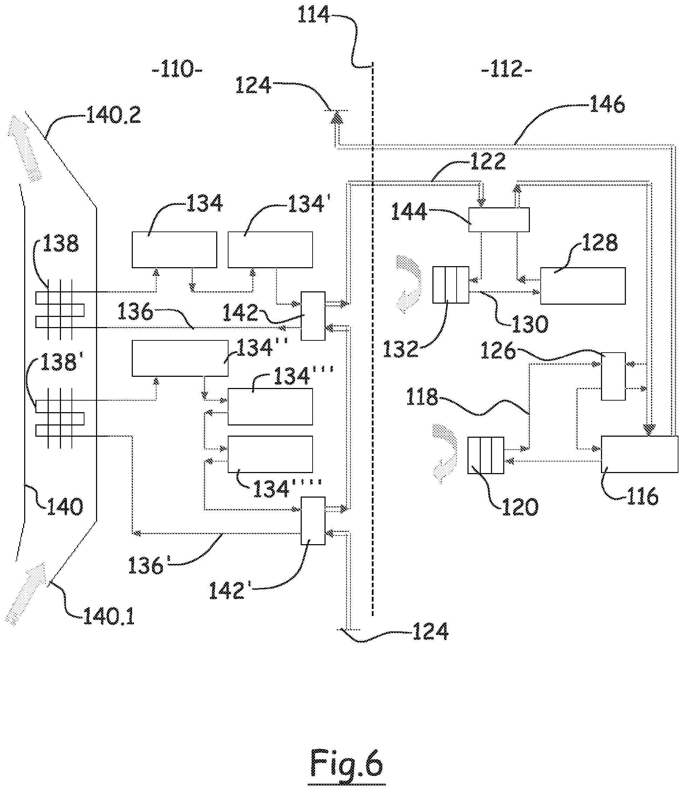

Sur la figure 6, on a représenté une variante de l'invention. Selon les variantes illustrées précédemment, la quantité de chaleur transportable par le carburant est limitée par la température maximale admissible du carburant (imposée par les règles de certification et par des limitations moteurs) ainsi que par le débit de carburant lié à la consommation en carburant de l'ensemble propulsif. Selon la variante illustrée sur la figure 6, il est possible d'augmenter la quantité de chaleur véhiculée par le carburant en augmentant le débit du carburant grâce à un circuit de retour 146 du carburant vers le réservoir 124 qui permet de renvoyer vers le réservoir, la quantité de carburant supérieure au besoin de la turbomachine.

Ce circuit de retour 146 peut comprendre des moyens de pompage, de filtration et de régulation du débit.

Selon ce mode de réalisation, la quantité de chaleur n'est plus limitée.

## Revendications

1. Procédé de gestion des réjections thermiques d'un aéronef comprenant une cellule (110) et au moins un ensemble propulsif (112), ledit au moins un ensemble propulsif (112) comprenant d'une part une turbomachine (116) alimentée en carburant via un circuit d'alimentation (122) en carburant s'étendant depuis un réservoir (124) disposé au niveau de la cellule (110), et d'autre part, au moins un circuit de refroidissement moteur (118, 130) comprenant un premier échangeur moteur (120, 132) pour évacuer les calories, ladite cellule (110) comprenant au moins une source de réjections thermiques (134) et au moins un circuit de refroidissement cellule (136, 136') dans lequel circule un fluide caloporteur pour refroidir la source de réjections thermiques (134), le carburant utilisé pour alimenter la turbomachine (116) étant utilisé comme fluide caloporteur pour dissiper au moins partiellement au niveau d'au moins un ensemble propulsif (112) les réjections thermiques générées au niveau de la cellule (110), au moins un échangeur d'interfaçage (142) permettant un transfert de chaleur depuis le fluide caloporteur du circuit de refroidissement cellule (136, 136') vers le carburant, au moins une partie de la quantité de chaleur véhiculée par le carburant étant captée par le fluide caloporteur dudit au moins un circuit de refroidissement moteur (118, 130) et dissipée par le premier échangeur moteur (120, 132) afin de maintenir la température du carburant alimentant la turbomachine (116) en dessous d'un certain seuil, **caractérisé en ce que** dès qu'une défaillance affectant la capacité de refroidissement d'un ensemble propulsif est détectée, des moyens de mesure et de contrôle isolent le circuit de carburant (122) des circuits de refroidissement cellule (136, 136').

2. Procédé de gestion des réjections thermiques d'un aéronef selon la revendication 1, **caractérisé en ce qu'**il consiste à augmenter la quantité de chaleur véhiculée par le carburant en augmentant le débit du carburant alimentant la turbomachine.

3. Dispositif de refroidissement d'un aéronef permettant la mise en oeuvre du procédé selon la revendication 1 ou 2, ledit aéronef comprenant une cellule (110) et au moins un ensemble propulsif (112), ledit au moins un ensemble propulsif (112) comprenant d'une part une turbomachine (116) alimentée en carburant via un circuit d'alimentation (122) en carburant s'étendant depuis un réservoir (124) disposé au niveau de la cellule (110), et d'autre part, au moins un circuit de refroidissement moteur (118, 130) comprenant un premier échangeur moteur (120, 132) pour évacuer les calories, ladite cellule (110) comprenant au moins une source de réjections thermiques (134) et au moins un circuit de refroidissement cellule (136) comportant un premier échangeur (138) et ledit dispositif de refroidissement comportant au moins un échangeur d'interfaçage (142) permettant de transférer une partie de la quantité de chaleur du fluide caloporteur circulant dans ledit au moins un circuit de refroidissement cellule (136) en direction du carburant qui véhicule ladite quantité de chaleur jusqu'à au moins une ensemble propulsif où elle est dissipée, un second échangeur (126, 144) étant prévu au niveau dudit au moins un circuit de refroidissement moteur (118, 130) afin qu'au moins une partie de la quantité de chaleur véhiculée par le carburant soit captée par le fluide caloporteur dudit au moins un circuit de refroidissement moteur (118) et dissipée par le premier échangeur moteur (120, 132), **caractérisé en ce que** le dispositif de refroidissement comprend des moyens de mesure et de contrôle permettant de détecter une défaillance au niveau d'un circuit de refroidissement moteur (118, 130) et isolant le carburant dudit au moins un circuit de refroidissement cellule (136, 136').

4. Aéronef comprenant un dispositif de refroidissement selon la revendication 3.

5. Aéronef selon la revendication 4, **caractérisé en ce qu'**il comprend un circuit (146) de retour vers le réservoir (124) du carburant non utilisée par ledit au moins un ensemble propulsif permettant d'augmenter le débit de carburant acheminé vers ledit ensemble propulsif et la quantité de chaleur véhiculée par ledit carburant.

## Patentansprüche

1. Verfahren zur Steuerung der Abwärme eines Luftfahrzeugs mit einer Zelle (110) und wenigstens einer Antriebseinheit (112), wobei die wenigstens eine Antriebseinheit (112) einerseits wenigstens eine Turbomaschine (116) aufweist, die über eine Treibstoffversorgungsleitung (122) mit Treibstoff versorgt wird, die sich von einem Reservoir (124) erstreckt, das im Bereich der Zelle (110) angeordnet ist, und andererseits eine Motorkühlleitung (118, 130) aufweist, die einen ersten Motorwärmetauscher (120, 132) zum Entfernen der Wärmeeinheiten umfasst, wobei die Zelle (110) wenigstens eine Abwärmequelle (134) und wenigstens eine Zellenkühlleitung (136, 136') aufweist, in der ein wärmetransportierendes Fluid fließt, um die Abwärmequelle (134) zu kühlen und wobei der zur Versorgung der Turbomaschine (116) verwendete Treibstoff als wärmetransportierendes Fluid verwendet wird, um im Bereich der wenigstens einen Antriebseinheit (112) die im Bereich der Zelle (110) erzeugte Abwärme wenigstens teilweise abzuführen, wobei wenigstens ein Schnittstellenwärmetauscher (142) eine Wärmeübertragung von dem wärmetransportierenden Fluid der Zellenkühlleitung (136, 136') zum Treibstoff gestattet und wenigstens ein Teil der vom Treibstoff transportierten Wärmemenge von dem wärmetransportierenden Fluid der wenigstens einen Motorkühlleitung (118, 130) aufgenommen und durch den ersten Motorwärmetauscher (120, 132) abgeführt wird, um die Temperatur des die Turbomaschine (116) versorgenden Treibstoffs unter einer bestimmten Schwelle zu halten, **dadurch gekennzeichnet, dass**, sobald eine die Kühlfähigkeit einer Antriebseinheit beeinträchtigenden Störung erfasst wird, Mittel zum Messen und zur Steuerung die Treibstoffleitung (122) von der Zellkühlungsleitung (136, 136') isolieren.

2. Verfahren zur Steuerung der Abwärme eines Luftfahrzeugs nach Anspruch 1, **dadurch gekennzeichnet, dass** dieses darin besteht, die durch den Treibstoff transportierte Wärmemenge dadurch zu erhöhen, dass der die Turbomaschine versorgende Treibstoffstrom erhöht wird.

3. Vorrichtung zur Kühlung eines Luftfahrzeugs, die die Ausführung des Verfahrens nach Anspruch 1 oder 2 ermöglicht, wobei das Luftfahrzeug eine Zelle (110) und wenigstens eine Antriebseinheit (112) aufweist und wobei die wenigstens eine Antriebseinheit (112) einerseits eine Turbomaschine (116) aufweist, die über eine Treibstoffversorgungsleitung (122) mit Treibstoff versorgt ist, die sich von einem Reservoir (124) erstreckt, das im Bereich der Zelle (110) angeordnet ist, und andererseits wenigstens eine Motorkühlleitung (118, 130) aufweist, die einen ersten Motorwärmetauscher (120, 132) umfasst, um die Wärmeeinheiten zu entfernen, wobei die Zelle (110) wenigstens eine Abwärmequelle (134) und wenigstens eine Zellenkühlleitung (136) aufweist, die einen ersten Wärmetauscher (138) und die besagte Kühlvorrichtung umfasst, die wenigstens einen Schnittstellenwärmetauscher (142) aufweist, der es gestattet, einen Teil der Wärmemenge des wärmetransportierenden Fluids, das in der wenigstens einen Zellenkühlleitung (136) fließt, auf den Treibstoff zu übertragen, der die Wärmemenge bis zu der wenigstens einen Antriebseinheit transportiert, wo diese abgeführt wird, wobei ein zweiter Wärmetauscher (126, 144) im Bereich der wenigstens einen Motorkühlleitung (118, 130) vorgesehen ist, um wenigsten einen Teil der vom Treibstoff transportierten Wärmemenge durch das wärmetransportierende Fluid der wenigstens einen Motorkühlleitung (118) aufzunehmen und durch den ersten Motorwärmetauscher (120, 132) abzuführen, **dadurch gekennzeichnet, dass** die Kühlvorrichtung Mittel zum Messen und Steuern aufweist, die es gestatten, eine Störung im Bereich der Motorkühlleitung (118, 130) zu erfassen und den Treibstoff von der wenigstens einen Zellenkühlleitung (136, 136') zu isolieren.

4. Luftfahrzeug, das eine Kühlvorrichtung nach Anspruch 3 aufweist.

5. Luftfahrzeug nach Anspruch 4, **dadurch gekennzeichnet, dass** dieses eine Rückführleitung (146) zum Reservoir (124) für den Treibstoff aufweist, der von der wenigstens einen Antriebseinheit nicht verwendet wird, was eine Erhöhung des der Antriebseinheit zugeführten Treibstoffstroms und damit der von dem Treibstoff transportierten Wärmemenge ermöglicht.

## Claims

1. Process for management of thermal effluents of an aircraft that comprises an airframe (110) and at least one propulsion system (112), whereby said at least one propulsion system (112) comprises, on the one hand, a gas turbine engine (116) that is supplied with fuel via a fuel supply circuit (122) that extends from a reservoir (124) that is arranged at the airframe (110), and, on the other hand, at least one engine cooling circuit (118, 130) that comprises a first engine exchanger (120, 132) for evacuating calories, whereby said airframe (110) comprises at least one source of thermal effluents (134) and at least one airframe cooling circuit (136, 136') in which circulates a coolant to cool the source of thermal effluents (134), whereby the fuel that is used for supplying the gas turbine engine (116) is used as a coolant for at least partially dissipating, at the level of at least one propulsion system (112), the thermal effluents that are generated at the airframe (110), at least an interface exchanger (142) that makes it possible to transfer heat from the coolant of the airframe cooling circuit (136, 136') to the fuel, at least a portion of the amount of heat that is conveyed by the fuel being collected by the coolant of said at least one engine cooling circuit (118, 130) and dissipated by the first engine exchanger (120, 132) so as to keep the temperature of the fuel that supplies the gas turbine engine (116) below a certain threshold, **characterized in that** as soon as a failure affecting the cooling capacity of a propulsion system is detected, means for measuring and monitoring isolate the fuel supply circuit (122) from the airframe cooling circuits (136, 136').

2. Process for management of thermal effluents of an aircraft according to claim 1, wherein it consists in increasing the amount of heat that is conveyed by the fuel by increasing the flow rate of the fuel that supplies the gas turbine engine.

3. Cooling device of an aircraft that makes possible the implementation of the process according to claim 1 or 2, whereby said aircraft comprises an airframe (110) and at least one propulsion system (112), whereby said at least one propulsion system (112) comprises, on the one hand, a gas turbine engine (116) that is supplied with fuel via a fuel supply circuit (122) that extends from a reservoir (124) that is arranged at the airframe (110), and, on the other hand, at least one engine cooling circuit (118, 130) that comprises a first engine exchanger (120, 132) for evacuating the calories, whereby said airframe (110) comprises at least one source of thermal effluents (134) and at least one airframe cooling circuit (136) that comprises a first exchanger (138) and said cooling device comprising at least an interface exchanger (142) that makes it possible to transfer a portion of the amount of heat of the coolant that circulates in said at least one airframe cooling circuit (136) in the direction of the fuel that conveys said amount of heat to at least one propulsion system where it is dissipated, wherein it comprises a second exchanger (126, 144) at the level of said at least one engine cooling circuit (118, 130) so that at least a portion of the amount of heat that is conveyed by the fuel is collected by the coolant of said at least one engine cooling circuit (118) and dissipated via the first engine exchanger (120, 132), **characterized in that** the coolant device comprises means for measuring and monitoring that make it possible to detect a failure at the level of an engine cooling circuit (118, 130) and that isolate the fuel from said at least one airframe cooling circuit (136, 136').

4. Aircraft that comprises a cooling device according to claim 3.

5. Aircraft according to claim 4, wherein it comprises a return circuit (146) toward the reservoir (124) of unused fuel by said at least one propulsion system that makes it possible to increase the flow rate of fuel channeled to said propulsion system and the amount of heat that is conveyed by said fuel.
